# EUROPEAN PATENT APPLICATION

(11) **EP 3 360 609 A1**
(43) Date of publication of application: **15.08.2018**
(21) Application number: 17155628.5
(22) Date of filing: 10.02.2017
(51) Int. Cl.: B01D 46/00, B01D 46/24, B01D 46/42

(54) **FILTER ELEMENT ARRANGEMENT WITH AN AT LEAST DOUBLED SAFETY FILTER ELEMENT**

(71) Applicant: Mann+Hummel GmbH, 71638 Ludwigsburg (DE)
(72) Inventor: ANTOMON, Chowalloor Rapheal, 560 058 Bangalore (IN); VARADA, Sushanth, 560090 Bangalore (IN); AGE, Suresh, 560 073 Bangalore (IN)
(74) Representative: Seyboth, Matthias

(57) **Abstract**

The present invention relates to a filter element arrangement (114) for a filter (110), in particular for a gas filter, preferably for an air filter. The filter element arrangement (114) comprises a main filter element (116) and a safety filter element (118). The safety filter element (118) comprises a first filter element (120) and a second filter element (122). The second filter element (122) is disposed at least partially in the first filter element (120). The filter element arrangement (114) is installable in a filter housing (112). The safety filter element (118) is connected to the main filter element (116) in a detachable way. The present invention also refers to a method for filtering a medium by using the aforementioned filter element arrangement (114).

## Description

### Technical field

The present invention relates to a filter element arrangement for a filter, in particular for a gas filter, preferably for an air filter. The invention further relates to a filter, in particular a gas filter, preferably an air filter, comprising such a filter element arrangement. The invention also relates to a method for filtering a medium by using an aforesaid filter arrangement.

### Background

US 2011/0192126 A1, FR 2 967 917 A1, GB 2 089 237 A and US 5,152,890 A each describe a filter with a main filter element, wherein the main filter element comprises several filter elements. The filter elements of the main filters described above are connected together non-detachably.

Besides these known filters it is well known to provide filters - in particular gas filters, preferably air filters - with a main filter element and a safety filter element. In an immaculate condition of the filter, the safety filter element preferably has a smaller pressure drop than the main filter element, so that most of the dirt in the medium to be filtered is separated in the main filter element, i.e. the main filtering action preferably occurs at the main filter element. The safety filter element serves the purpose of a "fail-safe" filter element: If the main filter element is clogged, the safety filter element will prevent the recipient of the medium from receiving either an insufficient amount of medium or from receiving dirty medium. The safety filter element further protects the recipient of the medium from receiving dirty medium in cases in which the main filter element is temporarily removed from the filter. The safety filter element is therefore detachably connected with the main filter element.

The known safety filter elements have the disadvantage that the safety filter elements provide a poor performance.

### Disclosure of the invention

It is therefore the object of the present invention to provide a filter element arrangement and a filter with such a filter element arrangement which provide a significantly better performance with respect to the safety filter element within the same available space. Another object of the present invention is the provision of a method for filtering a medium by using the aforementioned filter element arrangement.

This object is solved by a filter element according to claim 1, a filter according to claim 10 and a method according to claim 11. The subjects of the depending claims are preferred examples.

In accordance with the invention, the aforementioned object is obtained by a filter element arrangement, which comprises a main filter element and a safety filter element. The safety filter element is connected to the main filter element in a detachable way. Furthermore, the safety filter element comprises a first filter element and a second filter element. The second filter element is installed at least partially inside the first filter element. The filter element arrangement is installable in a filter housing of a filter.

Advantageously, a bigger filtering area can be obtained in the available space by using several filter elements which are arranged one inside the other. Furthermore, different materials can be disposed in the various filter elements, for example non-woven and cellular materials. Non-woven or fleece materials offer higher resistance to the air flow in comparison with cellulose materials, for example when pleated filter elements like bellows are used. On the other hand the cost of cellulose materials is higher than for non-woven materials. In a filter arrangement with two filter elements, the advantages of both materials can be combined, for example by using cellulose material for the second filter element and fleece material for the first filter element. If the same material is used for both filter elements, the pressure drop will be reduced by the increased total filtering area of the safety filter element as compared with a filter without the second filter element. If a material with a better filtering quality, i.e. a finer material, is used for both filter elements, the pressure drop will be about the same as when a safety filter element consisting of only the first filter element with a material having less filtering quality is used, i.e. a more coarse material.

In an advantageous embodiment, the safety filter element is built in such a manner that the medium is passed either through the first filter element or the second filter element.

In particular, a fluidical connection, for example a channel, from the main filter to the second filter element can have the effect of guiding the medium partially to the second filter element. Advantageously, such a connection allows for the control of the amount of the medium that will be filtered by the second filter element.

In an advantageous embodiment, the main filter element, the first filter element and the second filter element are built as circular filter elements sharing a common longitudinal filter element axis. In this arrangement of concentric filter elements the medium, for example a gas like air, will typically enter through the side walls and exit through either the area at the top or the area at the bottom. Advantageously, the path of the medium flow is comparatively short with an optimal usage of the filter area.

In an advantageous embodiment, the first filter element is built to filter the medium radially inwards whereas the second filter element is built to filter the medium radially outwards. To this end, the first filter element can be placed with its radial wall facing the inner wall of the main filter, wherein the outlet is positioned at the axial end of the first filter element. Thereby, the medium flows from the main filter element, which is positioned outside the first filter element, through the wall of the first filter element into its interior while being filtered. Furthermore, a direct fluidical connection for the medium can be built between the main filter and the interior of the second filter element. After entering the second filter element through this fluidical connection, the medium flows from the interior of the second filter element outwards through its radial wall while being filtered. Advantageously, the medium from the second filter element can exit the filter element arrangement through the same outlet as the medium from the first filter element. This allows for a compact construction of the filter.

In a further embodiment, the first filter element is built to receive the medium in a radial direction from the main filter, and the second filter element has its inlet in an axial direction.

The safety filter element is built to be removable from the main filter element in a nondestructive manner, in particular without tools. Advantageously, the filter element arrangement can then be deconstructed easily, for example for cleaning purposes.

In an advantageous embodiment, the safety filter element comprises a spacer which supports the safety filter element in an axial direction with respect to the bottom of the filter housing.

In an advantageous embodiment, the spacer comprises at least one radial feedthrough for providing the second filter element with medium from the main filter element. Thereby, the medium can be guided from the lateral surface at the lower portion of the main filter element into the second filter element in an easy manner.

In an advantageous embodiment, the spacer is built as a handle for the removal of the safety filter element from the filter element arrangement. Thereby, the filter safety element can be removed from the filter manually in an easy way.

In an advantageous embodiment, the filter comprises a filter housing and one of the aforesaid filter element arrangements, wherein the filter element arrangement is installed inside the filter housing. The filter housing can be helpful in better protecting the filter elements.

With a method for filtering a medium by use of one of the aforesaid devices, the medium flows through an inlet to a main filter element and then through a wall of said main filter element into its interior. Afterwards a first portion of the medium is guided through a wall of a first filter element into the interior of the first filter element. A second portion of the medium is guided through a fluidical connection into the interior of a second filter element, which is positioned at least partially inside the first filter element. This second portion of the medium is guided through a wall of the second filter element into the interior of the first filter element. Then the second portion of the medium flows to an outlet together with the first portion of the medium.

### Brief description of drawings

Other advantages and features of the invention will be appreciated from the following description of embodiments of the invention with reference to the figures of the drawings, which show significant details, and from the claims. The individual features may each be carried out individually or carried out together in any combination in variants of the invention.
- Figure 1: shows a filter in a longitudinal section, the filter having a safety filter element according to a first embodiment;
- Figure 2: shows a longitudinal section of the safety filter element according to the first embodiment as shown in figure 1, the safety filter element having a first filter element and a second filter element;
- Figure 3: shows a longitudinal section of the first filter element according to the first embodiment as shown in figure 2;
- Figure 4: shows a longitudinal section of the second filter element according to the first embodiment as shown in figure 2;
- Figure 5: shows a longitudinal section of a safety filter element according to a second embodiment;
- Figure 6: shows a longitudinal section of a safety filter element according to a third embodiment; and
- Figure 7: shows a longitudinal section of a safety filter element according to a fourth embodiment.

### Detailed description

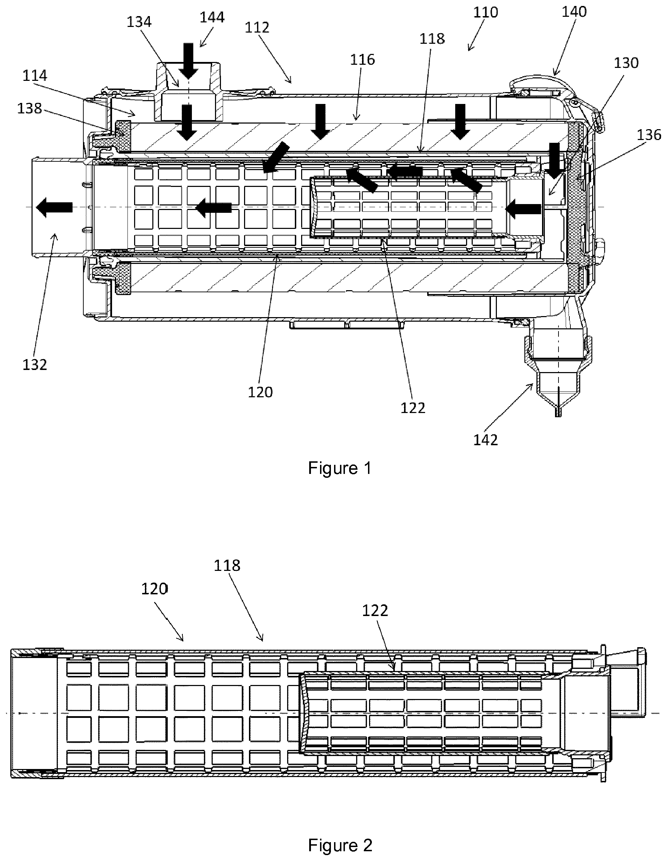

Figure 1 shows a filter **110** with a filter housing **112** in which a filter element arrangement **114** is installed. The filter element arrangement 114 comprises a main filter element **116** and a safety filter element **118**. The safety filter element 118 comprises a first filter element **120** and a second filter element **122**. The first filter element 120 is disposed within the main filter element 116. The second filter element 122 is placed within the first filter element 120. The main filter element 116, the first filter element 120 and the second filter element 122 are built as concentric hollow cylinders. Both the first filter element 120 and the second filter element 122 comprise a radial mesh for the support of a filter fleece.

Axially below the safety filter element 118 a fluidical connection **130**, preferably a channel, is built next to the inner walls of the main filter element 116. The fluidical connection 130 is connected only to the lower end of the second filter element 122, not to the first filter element 120. Therefore the medium to be filtered, here air, is partially guided through the main filter element 116 into the interior of the second filter element 122. At the top end of the safety filter element 118, which is disposed opposite to the fluidical connection 130, an outlet **132** is arranged. This outlet 132 is positioned at the area at the top of the first filter element 120. The outlet 132 is built in the form of a hollow cylinder of the same diameter as the first filter element 120. An inlet **134** for the medium is arranged at an outer radial wall of the filter housing 112.

At the bottom of the fluidical connection 130, opposite to the safety filter element 118, i.e. at the corresponding lower end of the main filter element 116, a floor element **136** is disposed, which is made of a material that is impermeable for the medium. Furthermore, at the top end of the main filter element 116 a material **138** is arranged that is impermeable for the medium.

A fastening element **140**, for example a snap fit, is disposed at the filter housing 112 for opening and closing the filter housing 112. The fastening element 140 can be opened in order to remove the filter element arrangement 114 from the filter 110, in particular the safety filter element 118. A valve **142**, in particular a dust dump valve, is arranged opposite to the fastening element 140 at the bottom of the filter. Through this valve 142, contamination particles can leave the filter 110 after being filtered from the medium. The flow **144** of the medium from the inlet 134 to the main filter element 116 and afterwards through the first filter element 120 and/or the second filter element 122 to the outlet 132 is represented by thick black arrows in the figure.

The second filter element 122 can be fixed to the first filter element 120 by spin welding or hot plate welding or by using a snap fit or gluing. Then the safety filter element 118 can be attached to the main filter element 116.

Figure 2 shows the safety filter element 118 according to a first embodiment. The first filter element 120 may have a coarse fiber layer. Hence, the first filter element 120 is built to filter coarse particles. The second filter element 122 may either have a fine fiber layer in order to filter fine particles or a coarse filter layer, too.

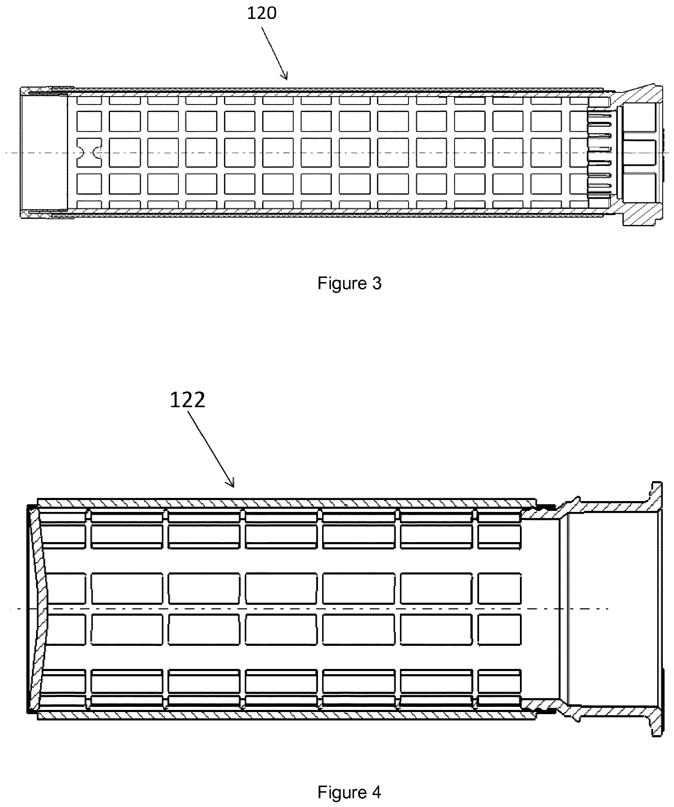

Figures 3 and 4 respectively show a longitudinal cross section through the first filter element 120 and the second filter element 122 in greater detail.

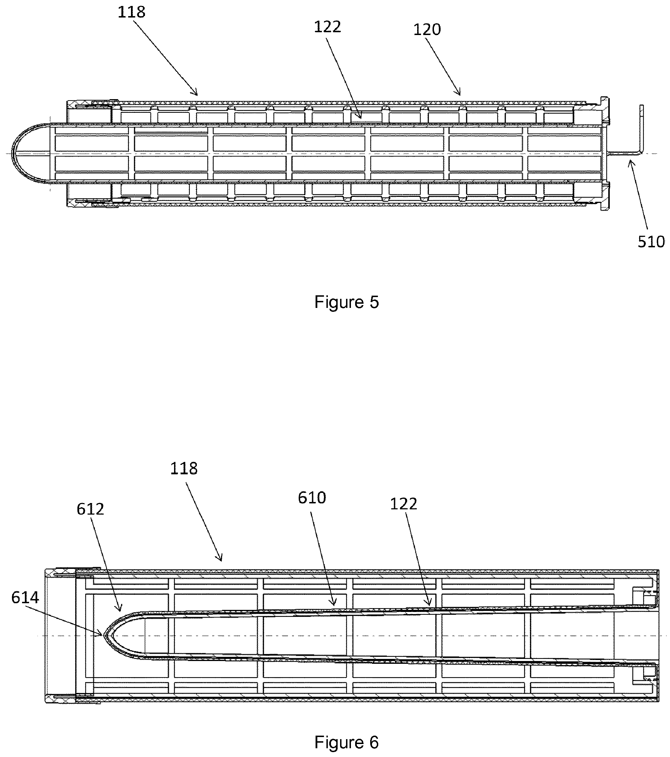

Figure 5 shows a longitudinal cross section through the safety filter element 118 according to a second embodiment of the invention. A spacer **510** which is preferably built as a hook is disposed at the lower end of the second filter element 122. The spacer 510 has two functions. On the one hand it can be used as a handle to remove the safety filter element 118. On the other hand it serves as a spacer element, keeping the safety filter element 118 and the floor element 136 (not shown) or the filter housing 112 (not shown) at a distance, thereby ensuring that the fluidical connection 130 (not shown) stays open and portions of the medium can flow from the main filter element 116 into the second filter element 122.

Figure 6 shows a longitudinal cross section of the safety filter element 118 according to a third embodiment of the invention. In its first lower axial section **610**, the second filter element 122 is built in the form of a hollow frustum of a cone. Next to this first lower section 610 a second upper section **612** is built in which the second filter element 122 is built in the form of a dome **614** showing the cross section of a flat pointed lancet arch.

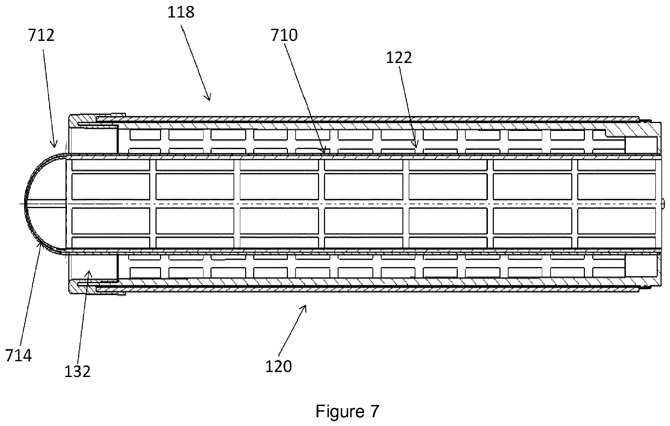

Figure 7 shows a longitudinal cross section of the safety filter element 118 according to a fourth embodiment of the invention. In its first lower section **710** the second filter element 122 is built in the form of a hollow cylinder along the full length of the first filter element 120. Next to this first lower section 710 a second upper section **712** is built in which the second filter element 122 is built in the form of a hemispherical dome **714**. At the upper end of the second filter element 122 an outlet 132 for the filtered medium is built at the outer wall of the second filter element 122 below the dome 714.

While operating the filter element arrangement 114 according to the invention, the medium is guided through the inlet 134 and a wall of the main filter element 116 radially in a direction from the outside to the inside. Thereafter, a first portion of the medium is guided through a wall of the first filter element 120 in a direction from the outside to the inside. A second portion of the medium enters the fluidical connection 130 and is guided into the interior of the second filter element 122. Thereafter, this second portion of the medium flows through a wall of the second filter element 122 radially from the inside to the outside. Then both portions of the medium are guided together to the outlet 132, which is preferably built at the first filter element 120.

## Claims

1. Filter element arrangement (114) for filtering a medium, wherein the filter element arrangement (114) is installable in a filter housing (112) of a filter (110) and wherein the filter element arrangement (114) comprises:
a. a main filter element (116);
b. a safety filter element (118), which is detachably-connected with respect to the main filter element (116);
wherein the safety filter element (118) comprises a first filter element (120) and a second filter element (122);
and wherein the second filter element (122) is installed at least partially inside the first filter element (120).

2. Filter element arrangement according to claim 1, wherein the safety filter element (118) is built in such a manner that the medium is passed either through the first filter element (120) or the second filter element (122).

3. Filter element arrangement according to claim 1 or 2, wherein the main filter element (116), the first filter element (120) and the second filter element (122) are built as circular filter elements sharing a common longitudinal filter element axis.

4. Filter element arrangement according to one of the preceding claims, wherein the first filter element (120) is built to filter the medium radially inwards whereas the second filter element (122) is built to filter the medium radially outwards.

5. Filter element arrangement according to one of the preceding claims, wherein the first filter element (120) is built to receive the medium in a radial direction from the main filter element (116), and the second filter element (122) has its inlet in an axial direction.

6. Filter element arrangement according to one of the preceding claims, wherein the safety filter element (118) is built to be removable from the main filter element (116) without tools.

7. Filter element arrangement according to one of the preceding claims, wherein the safety filter element (118) comprises a spacer (510) which supports the safety filter element (118) in an axial direction with respect to the bottom of the filter housing (112).

8. Filter element arrangement according to claim 6, wherein the spacer (510) comprises at least one radial feedthrough for providing the second filter element (122) with medium from the main filter element (116).

9. Filter element arrangement according to claim 6 or 7, wherein the spacer (510) is built as a handle for the removal of the safety filter element (118) from the filter element arrangement (114).

10. Filter (110) with a filter housing (112) and a filter element arrangement (114) according to one of the preceding claims, wherein the filter element arrangement (114) is installed inside the filter housing (112).

11. Method for filtering a medium by use of a filter (110) according to claim 10, wherein the medium flows through an inlet (134) to a main filter element (116) and then through said main filter element (116) into its interior,
wherein
afterwards a first portion of the medium is guided through a first filter element (120) into the interior of the first filter element (120),
wherein the first filter element (120) is disposed inside the main filter element (116) and a second portion of the medium is guided through a fluidical connection (130) into the interior of a second filter element (122), which is positioned at least partially inside the first filter element (120),
wherein said second portion of the medium is then guided through the second filter element (122) into the interior of the first filter element (120), and then the second portion of the medium flows to an outlet (132) together with the first portion of the medium.
